Europäisches Patentamt

(19) European Patent Office

Office européen des brevets

(11) Numéro de publication : **0 115 322**
**B1**

(12) **FASCICULE DE BREVET EUROPÉEN**

(45) Date de publication du fascicule du brevet :
10.09.86

(51) Int. Cl.⁴ : **H 02 G 15/068**

(21) Numéro de dépôt : **84100709.9**

(22) Date de dépôt : **24.01.84**

(54) **Dispositif moulé recouvrant une extrémité d'un câble électrique moyenne tension.**

(30) Priorité : 27.01.83 FR 8301214

(43) Date de publication de la demande :
08.08.84 Bulletin 84/32

(45) Mention de la délivrance du brevet :
10.09.86 Bulletin 86/37

(84) Etats contractants désignés :
BE CH DE FR GB IT LI LU NL

(56) Documents cités :
EP-A- 0 007 584
FR-A- 2 456 410
US-A- 4 234 757

(73) Titulaire : **LES CABLES DE LYON Société anonyme dite:**
**170 quai de Clichy**
**F-92111 Clichy Cedex (FR)**

(72) Inventeur : **Frayssinoux, Hervé**
**59, rue Paul Verlaine**
**F-69100 Villeurbanne (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention a pour objet un dispositif moulé recouvrant une extrémité d'un câble électrique moyenne tension, ce câble comprenant successivement une âme conductrice reliée à un serre-fil, une couche isolante, une couche semi-conductrice pour réguler les potentiels extérieurs, une gaine isolante extérieure, dispositif enfichable sur l'extrémité du câble et comportant un corps d'extrémité tubulaire isolant qui recouvre en partie la couche isolante dénudée, une couche protectrice extérieure à profil à ailettes dont l'extrémité côté câble recouvre la gaine isolante extérieure du câble et dont l'extrémité côté serre-fil recouvre la couche isolante laissée découverte par le corps d'extrémité.

Afin d'éviter la formation d'effluves aux extrémités de câbles électriques moyenne tension raccordés à des postes ou à des cellules compactes, il faut répartir linéairement le champ électrique le long des isolants de ces câbles.

Les moyens de répartition de champ, généralement utilisés pour ces câbles moyenne tension, sont de deux sortes.

On utilise un cône moulé préfabriqué comprenant un déflecteur de champ semi-conducteur de forme appropriée surmoulé sur un cône isolant, lui-même moulé et adapté aux dimensions du câble. Dans ce cas l'ensemble constitue une pièce unique qui s'enfile sur la couche isolante du câble à l'arrêt de la couche semi-conductrice qui est alors en contact intime avec le déflecteur de champ. Entre une pièce de raccordement du conducteur et la position du cône préfabriqué on doit ménager une ligne de fuite importante qui est fonction de la tension de service.

Un inconvénient de ce dispositif réside dans son encombrement. La longueur de la ligne de fuite à ménager est importante et souvent incompatible avec les dimensions réduites des postes ou cellules compacts dans lesquels aboutissent les câbles.

On utilise aussi un répartiteur de tension constitué par une couche mince à base de poudre de carbure de silicium ou produit similaire déposée à l'intérieur d'une gaine tubulaire thermorétractable ou enfilable par élasticité. Le répartiteur de tension est monté sur l'isolant du câble à partir de l'arrêt de sa couche semi-conductrice extérieure. La longueur du répartiteur de tension dépend de la tension de service. Après sa mise en place sur le câble le répartiteur de tension doit être protégé par l'adjonction d'une gaine thermorétractable anticorrosion ou anticheminement, ou par l'empilage de plusieurs éléments de gaines élastiques appropriées (voir EP-A-0 007 584).

Un inconvénient de ce dispositif réside dans la complexité de la mise en place des divers éléments thermorétractables ou élastiques qui doivent être ajustés successivement.

La présente invention a pour but de combiner les avantages d'un déflecteur de champ et d'un répartiteur de tension en une seule pièce, tout en permettant un montage rapide du dispositif par un simple enfichage sur une extrémité d'un câble dénudée de manière appropriée, et en procurant un encombrement minimum.

La présente invention est caractérisée en ce que le dispositif comprend une embase semi-conductrice ayant la forme d'un déflecteur de champ recouvrant la couche semi-conductrice dénudée ainsi qu'une partie dénudée de la couche isolante du câble, et un répartiteur de tension recouvrant entièrement le corps d'extrémité et l'embase semi-conductrice.

De préférence, le déflecteur de champ, le corps d'extrémité et le répartiteur de tension prolongent la couche semi-conductrice et la gaine isolante extérieure du câble.

Avantageusement, la couche protectrice extérieure possède un crantage d'étanchéité se serrant sur la partie externe d'un serre fil.

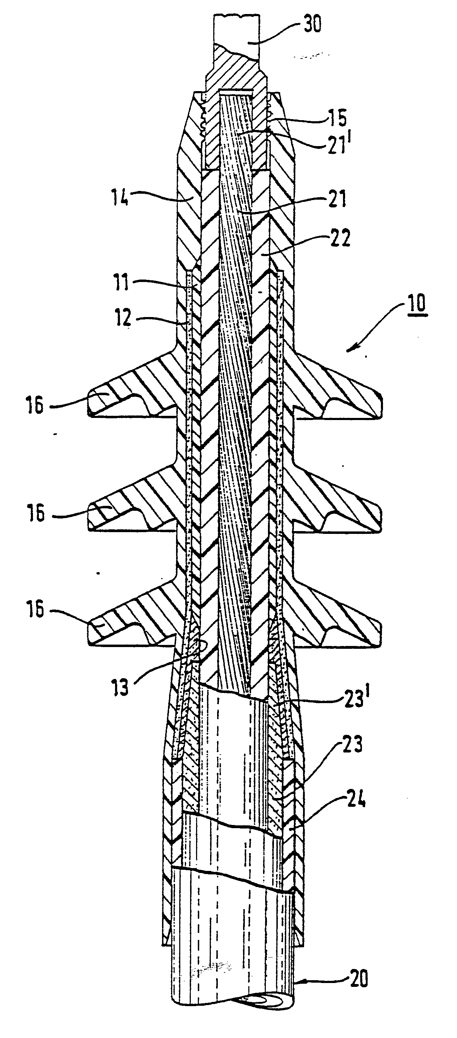

Il est décrit ci-après à titre d'exemple et en référence à la figure unique du dessin annexé, un dispositif moulé selon l'invention recouvrant un câble moyenne tension.

Dans cette figure unique, il est représenté une extrémité d'un câble 20 moyenne tension monopolaire comprenant une âme conductrice 21 multibrins en cuivre ou en aluminium se terminant par une partie dénudée 21', une couche isolante 22 dénudée également qui peut être en polyéthylène ou en papier, une couche semi-conductrice 23 se terminant par une partie dénudée et chanfreinée 23', une gaine isolante extérieure 24 en polyéthylène. Entre la couche semi-conductrice et la gaine isolante extérieure, le câble peut éventuellement posséder un écran métallique et dans ce cas cet écran est dénudé au même niveau que la gaine extérieure. De plus, cet écran peut être également relié à une prise de terre par un dispositif approprié.

A l'extrémité du câble 20, un serre-fil 30 est positionné sur la partie dénudée 21' de l'âme conductrice 21. Ce serre-fil 30 peut être relié par exemple à une boîte de connexion d'un transformateur non représentée.

Le dispositif moulé 10 est enfiché sur l'extrémité du câble 20 dénudée comme décrit précédemment. Un crantage d'extrémité 15 assure l'étanchéité au niveau du serre-fil 30.

Ce dispositif moulé comporte une couche protectrice extérieure 14, un corps d'extrémité tubulaire isolant 11 recouvrant la majeure partie de la couche isolante 22, une embase semi-conductrice 13 prolongeant le corps d'extrémité et recouvrant une petite partie de la couche isolante 22 et la partie chanfreinée 23' de la couche semi-conductrice 23, un répartiteur de tension 12 recouvrant le corps d'extrémité et l'embase semi-conductrice.

Le répartiteur de tension ainsi que le corps d'extrémité, sont interrompus avant d'atteindre l'extrémité du câble raccordée au serre-fil, pour limiter les courants de fuite. La couche protectrice extérieure 14 recouvre alors, une partie de l'extrémité de la couche isolante 22, le répartiteur de tension 12 et la gaine extérieure 24 du câble sur une distance au moins égale à la distance de couche isolante 22 recouverte par cette même couche protectrice 14.

Le corps d'extrémité 11 tubulaire en isolant caoutchouc ou autre peut être obtenu par mise en œuvre d'une technique de moulage.

L'embase 13 en caoutchouc semi-conducteur ayant la forme d'un déflecteur de champ, est juxtaposée intimement, par une technique de surmoulage par exemple ou par collage, au corps d'extrémité 11.

Le répartiteur 12 est constitué par un dépôt mince de poudre de carbure de silicium par exemple, ou par un produit similaire donnant les mêmes effets. Ce dépôt peut être mis en place par peinture ou par projection, ou être constitué par un rubanage ou un tube élastique, en caoutchouc ou autre, comportant un répartiteur de tension dans la masse. Les dimensions de ce dépôt varient suivant la tension de service du câble sur lequel le dispositif doit être utilisé.

La couche extérieure protectrice 14, à profil à ailettes 16 est aussi en isolant caoutchouc ou autre. Cette couche 14 est obtenue par mise en œuvre d'une technique de surmoulage par exemple. Elle peut permettre par élasticité de réaliser l'étanchéité sur le serre-fil du conducteur, sur la gaine isolante extérieure du câble, et sur la prise de terre de l'écran.

La forme et les dimensions de cette couche 14, ainsi que le nombre d'ailettes 16, peuvent varier avec les dimensions du câble et la tension de service.

## Revendications

1. Dispositif moulé (10) recouvrant une extrémité d'un câble électrique (20) moyenne tension, ce câble comprenant successivement une âme conductrice (21) reliée à un serre-fil (30), une couche isolante (22), une couche semi-conductrice (23) pour réguler les potentiels extérieurs, une gaine isolante extérieure (24), dispositif enfichable sur l'extrémité du câble et comportant un corps d'extrémité tubulaire isolant (11) qui recouvre en partie la couche isolante (22) dénudée, une couche protectrice extérieure (14) à profil à ailettes (16) dont l'extrémité côté câble recouvre la gaine isolante extérieure (24) du câble et dont l'extrémité côté serre-fil recouvre la couche isolante (22) laissée découverte par le corps d'extrémité, caractérisé en ce qu'il comporte en outre, une embase semi-conductrice (13) ayant la forme d'un déflecteur de champ recouvrant la couche semi-conductrice (23) dénudée ainsi qu'une partie dénudée de la couche isolante (22) du câble, et un répartiteur de tension (12) recouvrant entièrement le corps d'extrémité (11) et l'embase semi-conductrice (13).

2. Dispositif moulé selon la revendication 1, caractérisé en ce que le déflecteur de champ, le corps d'extrémité (11) et le répartiteur de tension (12) prolongent la couche semi-conductrice (23) et la gaine isolante extérieure (24) du câble.

3. Dispositif moulé selon la revendication 1, caractérisé en ce que la couche protectrice extérieure (14) possède un crantage d'étanchéité (15) se serrant sur la partie externe du serre fil (30).

## Claims

1. A moulded device (10) covering one end of an electrical cable (20) of medium voltage, this cable comprising successively a conductive core (21) connected to a wire-press (30), an insulating layer (22), a semi-conductive layer (23) for regulating the outer potentials, an outer insulating sleeve (24), device which may be slipped on the end of the cable and comprises a tubular insulating end body (11) which partially covers the bared insulating layer (22), an outer protection layer (14) with a rib-profile (16), one end of this layer on the side of the cable covering the outer insulating sleeve (24) of the cable and the other end on the side of the wire-press covering the insulating layer (22) left bare by the end body, characterized in that it further comprises a semi-conductive base (13) having the form of a field deflector covering the bared semi-conductive layer (23) as well as a bared portion of the insulating layer (22) of the cable, and a voltage distributor (12) which totally covers the end body (11) and the semi-conductive base (13).

2. A moulded device according to claim 1, characterized in that the field deflector, the end body (11) and the voltage distributor (12) constitute prolongations of the semi-conductive layer (23) and the outer insulating sleeve (24) of the cable.

3. A moulded device according to claim 1, characterized in that the outer protective layer (14) possesses sealing notches (15) pressing on the outside portion of the wire-press (30).

## Patentansprüche

1. Ein Ende eines elektrischen Mittelspannungskabels (20) umgebende gegossene Vorrichtung (10), wobei dieses Kabel aufeinanderfolgend eine mit einer Preßhülse (30) verbundene leitende Seele (21), eine Isolierschicht (22), eine halbleitende Schicht (23) zur Regulierung der äußeren Potentiale und eine äußere Isolierhülle (24) aufweist und wobei die Vorrichtung auf das Kabelende aufsteckbar ist und einen rohrförmigen isolierenden Endkörper (11), der teilweise die abgelängte Isolierschicht (22) bedeckt, und eine äußere Schutzschicht (14) mit Rippenprofil (16) aufweist, deren kabelseitiges Ende die äußere Isolierhülle (24) des Kabels und deren preßhüllenseitiges Ende die Isolierschicht (22) bedeckt, die vom Endkörper freigelassen wird, dadurch gekennzeichnet, daß sie außerdem einen halbleitenden Sockel (13), der die Form eines die freigelegte Halbleiterschicht (23) und einen freigelegten Bereich der Isolierschicht (22) bedeckenden Felddeflektors hat, und einen Spannungsverteiler (12) aufweist, der den Endkörper (11) und den halbleitenden Sockel (13) ganz bedeckt.

2. Gegossene Vorrichtung nach Anspruch 1, dadurch gekennzeichnet, daß der Felddeflektor, der Endkörper (11) und der Spannungsverteiler (12) die halbleitende Schicht (23) und die äußere Isolierhülle (24) des Kabels verlängern.

3. Gegossene Vorrichtung nach Anspruch 1, dadurch gekennzeichnet, daß die äußere Schutzschicht (14) Dichtungskerben (15) aufweist, die den äußeren Teil der Preßhülse (30) umschliessen.